# EUROPEAN PATENT APPLICATION

(11) **EP 1 562 354 A1**
(43) Date of publication of application: **10.08.2005**
(21) Application number: 04290349.2
(22) Date of filing: 09.02.2004
(51) Int. Cl.: H04M 1/725

(54) **A method, a mobile communication device, a remote device, and a computer software product for notifying a user and controlling the mobile communication device**

(71) Applicant: ALCATEL, 75008 Paris (FR)
(72) Inventor: Rössler, Horst, 70794 Filderstadt (DE); Szabo, Peter, Dr., 75180 Pforzheim (DE); Hoche, Michael Walter, Dr., 71701 Schwieberdingen (DE)
(74) Representative: Brose, Gerhard

(57) **Abstract**

The invention is a method for notifying a user and controlling a mobile communication device by means of a remote device. The method comprising the steps of assigning an event to a notification, detecting the event and triggering the notification by the mobile communication device, where the notification is assigned to the remote device, the remote device is triggered by the mobile communication device in case of the detected event and the user is notified by the remote device. The method might further comprise the steps of assigning a control element to the remote device and detecting an interaction with the control element on the remote device and controlling remotely the mobile communication device. The invention further relates to the mobile communication device, the remote device, and a computer software product.

## Description

The present invention relates to a method for notifying a user and controlling a mobile communication device by means of a remote device. The invention further relates to the mobile communication device, the remote device, and a computer software product.

Today's mobile communication devices like the well known mobiles, palm tops, or hand-helds have multiple functionality. This comprises e.g. photo capabilities in multiple capture modes like picture, mosaic, photo clip, with or without sound, color modes, timer, brightness etc. setting, zoom, a mirror for self portrait, stamping for personalization or a media album. Another capability is messaging, i.e. asynchronous sending and receiving multimedia or text messages by applying communication systems like GPRS / GSM or UMTS, handled via an intuitive and simple interface. A further capability aspect is embedded gaming allowing entertainment interaction e.g. via controls like shoot keys or direction drive keys and audio, video, or even kinetic feedback. Another important capability is the presentation and management of rich multimedia content like embedded photos, pictures, animations, melodies and sounds, menus, browsers, atmospheres (device configurations suited for certain operating contexts or moods), composer, recorder and browsers for various formats. And the multiple advanced services and connectivity like a built-in GPRS modem, a WAP browser, infrared, Bluetooth and the like interface and communication ports, applications like a personal information manager with a multi-field directory, a scheduler, a To Do list, etc, synchronization features with e.g. Lotus Notes, Microsoft Outlook, etc. voice command interpreter, voice memo, voice dialing, a calculator, a currency converter, or a simple clock.

Such a multi mode mobile communication device with an incoming call notification method is disclosed in the United States Patent Application No. 6,574,489.

It seems that mobile communication devices have evolved to a summery of useful widgets supporting multimedia interaction, ergonomically controlled for picture shooting, looking, multimedia messaging, hearing, playing, organizing, and connecting. Covering all the functionality requires a well designed user interface. Another trend of these mobile devices is miniaturization.

Thus there is a certain trade off between multiple functionality and size. It is a problem to arrange the control and notification capabilities of such a manifold of functionality into a small sized mobile communication device.

The way out of this dilemma is a method for notifying a user and controlling a mobile communication device by means of a remote device by assigning an event to a notification, detecting the event and triggering the notification by the mobile communication device, where the triggering comprises assigning the notification to the remote device, triggering the remote device by the mobile communication device in case of the detected event and notifying a user by the remote device. Furthermore the method might comprise assigning a control element to the remote device and detecting an interaction with the control element on the remote device and controlling remotely the mobile communication device.

The problem is solved inter alia by a mobile communication device comprising a user interface for notifying and controlling the mobile communication device, the user interface comprising control means and notification means, the mobile communication device comprising further processing means for detecting an event and triggering a remote device in case of the detected event, the mobile communication device comprising further communication means for communicating with a remote device, the control means are adapted to assign a notification to the remote device, and the processing means are adapted to trigger the remote device in case of the detected event via the communication means. And the mobile communication device might further comprise control means that are adapted to assign a control element to the remote device and the processing means are adapted to interpret interaction with the control element on the remote device and controlling remotely the mobile communication device via the communication means.

The problem is also solved by a computer software product implementing the method according to the invention.

In other words current mobiles using multiple notification symbols and controls concentrated on one core mobile device. The advantage of the invention and the enhanced functionality is illustrated by a use case. Often the mobile device is not retrievable. A trick to locate the mobile device is calling it from another communication device, e.g. a fixed phone, and following the ring tone. This is in several cases not feasible, e.g. in the case when the mobile is in a silent mode. For key fobs there are devices that react on certain triggers e.g. when whistling. There are advanced location based services for retrieval disclosed for example in the International Patent Application No. WO 02/17567 A2 but all these kind of services lack on the embedding into a user interface as a metaphor and the pro-active invocation of the location menthod. The application of location based services rely for example on the activation mode of the mobile device.

One aspect of this invention is to proxy a notification where an extended and advanced ergonomic user interface for a mobile device enables a tight and a loose communication mode. In its full generality controls and notifications could be transferred or delegated between a mobile communication device and a remote device. A loose communication mode is suggested for shortly informing the user e.g. via audio signals or short messages, such as notification to a tight user interface of a remote device like an enhanced watch. This mode also allows to track, control, and find an associated mobile device, e.g. a mobile phone a hand held etc. The tight mode is the usual user interface, i.e. the direct (physical) interaction with the mobile device. The notification and control capability could even be transferred to a fixed terminal, e.g. as a web page.

In the location scenario above the mobile device is enabled before going down in hibernate mode to inform the remote device(s) about location and operative state or even notifying the user by an audio alert. Or the remote device could be enabled to control waking up the mobile.

One preferred embodiment of the remote device is a tightly coupled user notification proxy like an amulet or a watch comprising limited controls and notification capabilities like a beeper or a small display.

The invention has certain advantage side effects. The security concerning theft and violation is improved because the remote device could be used to authenticate a user.

It enables a bunch of new indirect communication modalities like the proxy above indicated notification or the retrieval. The device becomes personalized like a car by the owners key.

Another advantage of the present invention is that several communication services are enabled like a web service proxying the controls and camera for a Internet client allowing for instance to establish a controllable visual connection by controlling the embedded camera of the mobile device.

Since today's mobiles are an expensive high-tech product, protection against theft and losing is a further advantage.

The invention underlies the idea to use a location service to find the handy, e.g. via a web portal. The access to the web portal might be protected by the authentication mechanism.

A location service might be based on the already implemented cell identifier with additional refinement like an agent that investigates the cell seeking for the mobile. This could be done by an autonomous intelligent mobile agent that activates if available the mobiles GPS or any other devices in the environment of the mobile e.g. a PCs having an interface to the mobile.

For a simple retrieval a second small device (e.g. integrated in a watch or an amulet) is suggested for triggering the mobile to identify itself e.g. by an acoustical signal. It is suggested to realized this feature such that it is always available, e.g. by a separate accumulator, and a low-power consuming simple receiver with acoustic signaling device like a piezzo. As illustrated by the example above this second small device could be used to realize certain additional notification and remote controlled services. E.g. a characteristic sound (user configurable) reminds according to a scheme a user about the receipt of a message, e.g. an e-mail at a PC that contacted the mobile communication device according to the invention or even the remote device according to the invention directly.

These and many other objects and advantages of the present invention will become apparent to those of ordinary skill in the art from a consideration of the drawings and ensuing description, where

**Figure. 1** is a schematic drawing of a prior art mobile communication device.

**Figure. 2** is a schematic drawing of user interface metaphors of a prior art mobile communication device.

**Figure. 3** is a schematic drawing of a mobile communication device and the remote device according to the invention.

**Figure. 4** is a schematic drawing of the infra structure of a mobile communication device and the remote device according to the invention.

**Figure. 5** is a diagram illustrating the method according to the invention.

Remote controlled user interfaces are well known in the context of computer. For user interfaces of mobiles communication devices a remote control (login) metaphor is new.

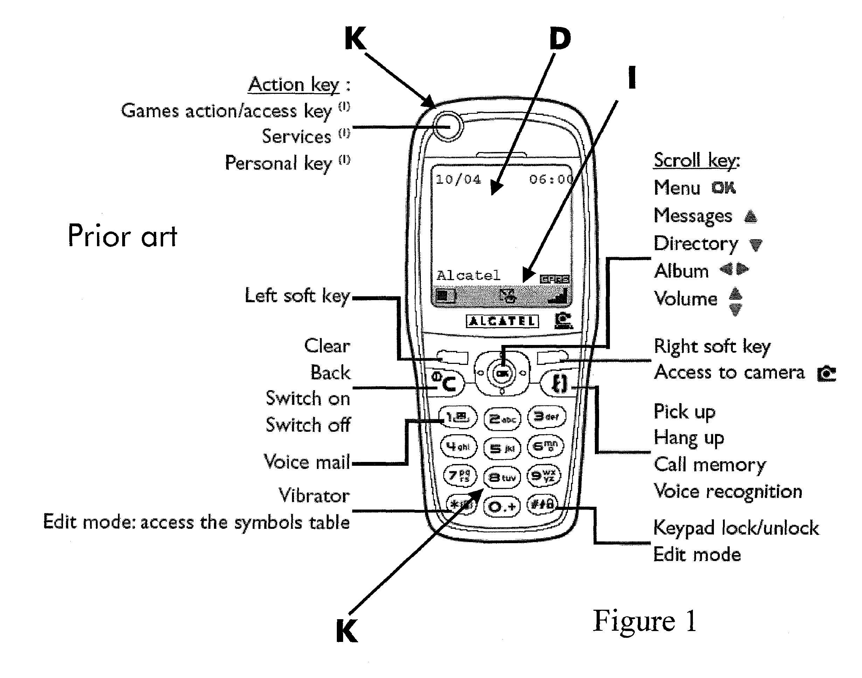

Figure. 1 shows a cut-out of a manual. The main control elements of a mobile communication device are shown, namely a set of keys K associated mode dependent with a functionality. These keys K are so-called control elements. Other control elements might be a voice input interpreting certain user commands, a touch screen or a touch pad, or any other kind of interaction sensor. The figure shows further a display D showing a screen with the date, time and several icons I. The set of output modalities like the display with text and graphics, supporting metaphors like text messaging, image messaging, icons, dates, etc. The further output modalities like ringing tones/melodies, voice, sound, vibration etc. are considered as notification means.

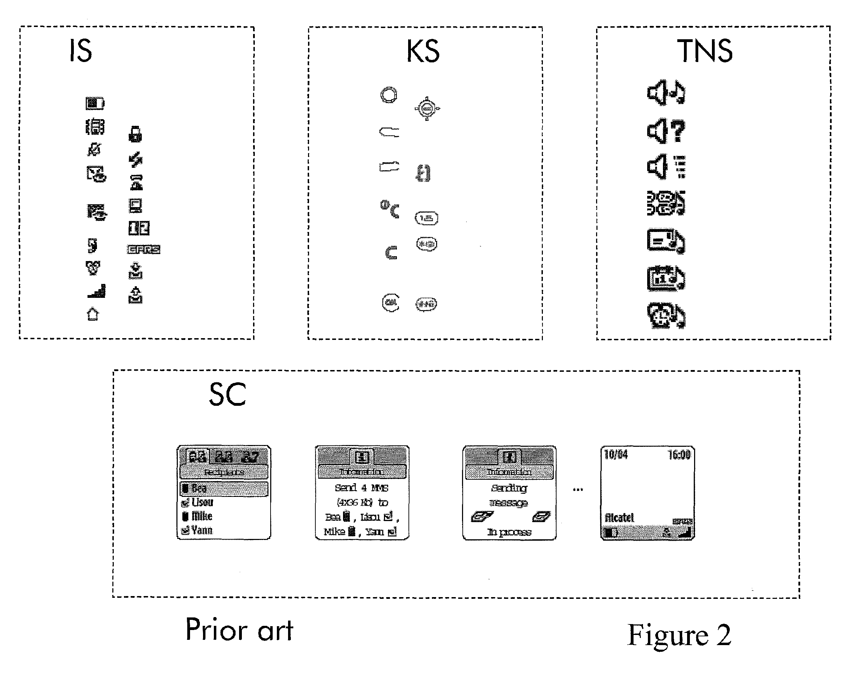

Figure. 2 shows a set of icon symbols IS, a set of key symbols KS, a set of tone notification symbols TNS and a set of screens SC (shown in the display D), where these symbols are shown and used to represent an operative state. Such an operative state might be presented by a shown icon symbol IS each associated with a short information about an event or a functionality, e.g. battery is low, key pad is locked etc. Key allocation might be presented by the key symbols or text, e.g. a menu text. And the tone notification symbols TNS represents if, how, and about what a user is notified dependent on operating mode and context, e.g. defined by the usual user preferences, location, usage etc.

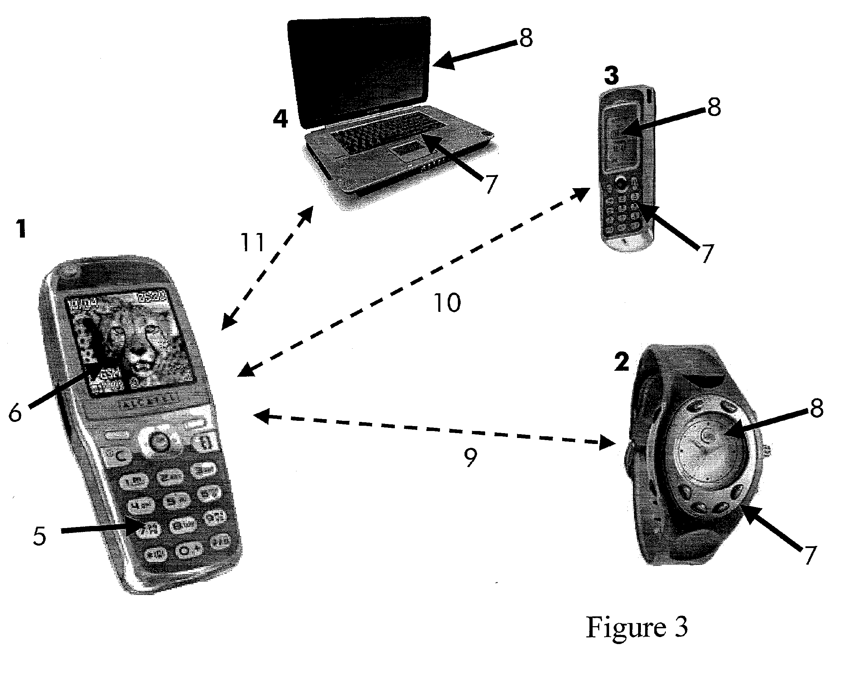

Figure. 3 shows a mobile communication device 1 with notification means 6 and control means 5. The figure shows further several remote devices 2, 3, and 4, namely a watch 2, an other mobile communication device 3, and a desk top 4. Each of the remote devices 2, 3, and 4, comprises also remote control elements 7 and notification means 8. The watch 2 is linked with the mobile communication device 1 via a first connection 9, the other mobile communication device 3, is linked with the mobile communication device 1 via a second connection 10, and the desk top 4 is linked with the mobile communication device 1 via a third connection 9.

The figure illustrates several modes of the invention, dependent on the physical form of the remote device. The watch 2 might comprise only few control elements 7, e.g. for remote hibernation, remote ringing (for retrieval) or for call refusing or accepting. Advanced models might comprise voice controls and speech communication capabilities. As notification means 8 the watch 2 might comprise a small display screen for short texts, a light or even capabilities to show several icons. Of course the watch might comprise a acoustic capability like ringing tones for certain events like message in-come or call in-come or appointment reminder etc. The first connection 9 might be realized by proven technologies like Bluetooth or infra red links.

The second remote device, i.e. the other mobile communication device 3, has similar control and notification capabilities. Thus a transfer mapping of a control element or a notification from the mobile communication device 1 and the other mobile communication device 3 is straight forward. Even parts of the software realizing certain functionality like a message filter or any other application like the above mentioned organizer could be transferred using mobile code technologies like mobile agents or Java. The second connection 10 might be also realized by proven technologies like Bluetooth or infra red links. Or the second connection 10 might be realized by a wireless local area network technology or even the mobile infrastructure itself, i.e. a link to a base station like a node B via a network controller and the mobile core network.

The third remote device, i.e. the desk top 4 could either emulate the control and notification capabilities of the mobile communication device 1 or could even provide new control elements and notification (metaphors) like a designation entity (mouse etc.) or the diversity of multimedia notifications (animations, speech, voice control, synthetic voice etc.). The remote invocation of a mobile communication device using a instruction forwarding is for example taught by the United States Patent Publication US 2003/0088933. Although most of today's desk tops have infra red interfaces or Bluetooth interfaces the third connection could even be realized by involving the mobile infrastructure and a computer network like the Intranet by using gateways. This information link is already today used for exchanging and replicating (application) data and messages like pictures, dictionaries, addresses, e-mails, appointments etc.

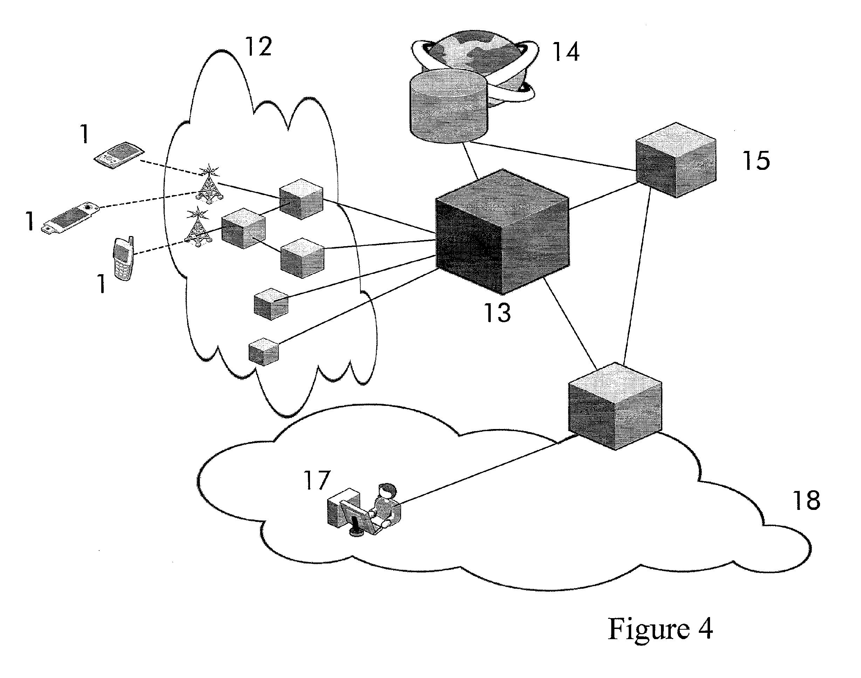

Figure 4 shows the embedding of the invention in a more complex infra structure than a direct infra red or a Bluetooth connection. The figure shows the mobile communication device 1 that is connected via a mobile infra structure 12 to a server 13 forming the claimed remote device. This server might be accessible via a gateway 16 from another network like a computer network or the Internet. From there a client terminal 17 might be connected to the server 13. The user interface of the client might be a web portal or an application software provided by the server 17 that presenting remote control elements and notification capabilities. Several applications might support the common control and notification sited in an application server 15. The server 13 and the application server 15 might be invoke special processing in case of location dependency, which is illustrated by a location server 14.

This architecture is allows to realize a method for notifying a user and controlling a mobile communication device where the event processing might be performed partially by the application servers by simulating delegated or transferred capabilities of the mobile communication device to a remote device and further from there to a client terminal 17. The involvement of spatial processing supports location awareness since this is lost for the user on the client terminal 17. Obviously the architecture also enables assigning a control element to the remote device. This assignment could be initiated on the mobile as a "push" or from the client terminal 17 or the server 13 as a "fetch". Since the control elements are transferable security mechanisms like authorization concepts are advantageous.

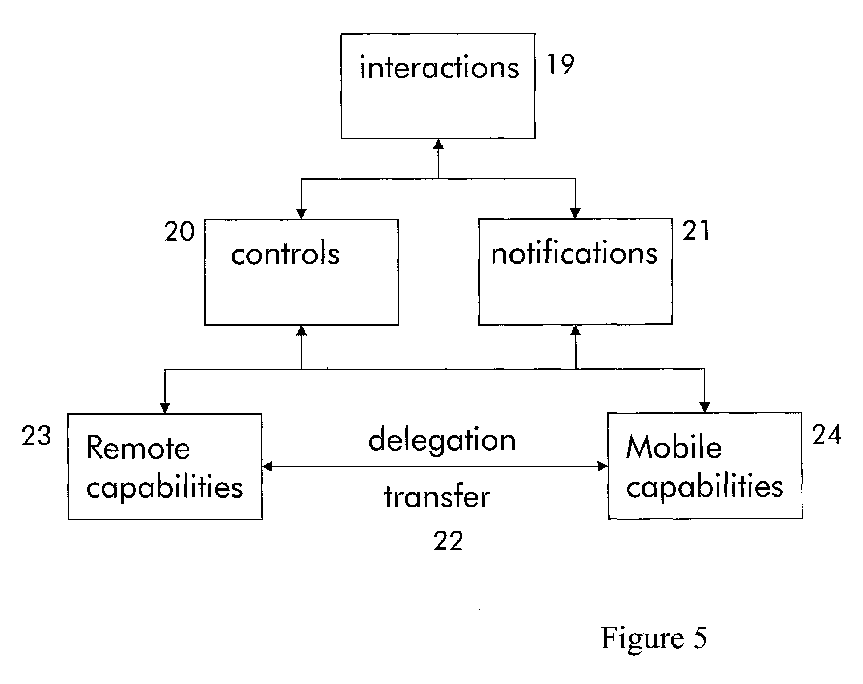

The concept of transfer of controls and notification is shown in figure 5. One can find a box modeling user interactions 19, the passive ones, herein called notification, and the active ones, called control. Correspondingly there is a control box 20, modeling the plurality of control elements (sensing or detecting user activity) of a user interface, and a notification box 21, modeling the plurality of notification elements (stimulating a users sense) of a user terminal. A device comprising a user interface has a set of control elements and notification elements, the device capabilities, say. To complete the picture there is a remote device capability box 23 and a mobile communication device capability box 24. The remote device capability box 23 and a mobile communication device capability box 24 are linked by a double arrow 22.

The user interactions 19 are in relation to the control box 20 and to the notification box 21 because control elements and notification elements will affect the user and will be reactive and stimulate a interaction. The control box 20 and to the notification box 21 correspond to capabilities of a device, i.e. the interaction has a defined semantic. For example pressing the "ON"-button will activate the device, or pressing a number key will mode dependent cause a dial activity, a message extension, a game interaction, a cursor movement etc. Notification and controls could be transferred between devices by simulating device capabilities which is shown by the double arrow 22. The simulation could either be complete i.e. the remote device takes the functionality over and the mobile communication device looses (or hides) the functionality. This could for instance realized by transferring mobile code realizing the functionality or by a device interaction where the e.g. the mobile communication device supports remotely a transferred functionality. Such a configuration could be realized by and application programming interface of the mobile communication device or an embedded command interpreter.

From a user point of view the control or notification is transferred or delegated to the remote device. And the technical realization is enabled by a communication link between the mobile communication device and the remote device.

The invention enables new device interaction metaphors and is about functionality abstraction. The current communication links between mobile communication devices are merely used for data transmission. The invention provides an extension by means of a consequent control and/or notification delegation.

The new abstraction and de-coupling allows to handle size and ergonomic requirements with an enhanced degree of freedom. For instance a power consuming sender, a central processing unit or a vibrator could be integrated into clothing, e.g. as attached to an belt and an elegant user interface e.g. a an amulet or a watch is used to realized the user interface. Of course the interaction, i.e. the meaning of notification and control comprises interactive media streams, e.g. the establishment of a voice connection between the remote device and a second party via the mobile communication device, where the mobile communication device proxying the media stream.

Regarding security and privacy as well as interaction of a manifold of remote and mobile communication devices it is favorably to protect the inter-connections between these devices by applying certain cryptology techniques e.g. coding.

## Claims

1. A method for notifying a user and controlling a mobile communication device by means of a remote device, the method comprising the steps of
- assigning an event to a notification,
- detecting the event and triggering the notification by the mobile communication device,
**characterized in that** said triggering comprises the steps of
- assigning the notification to the remote device,
- triggering a remote device by the mobile communication device in case of the detected event and
- notifying a user by the remote device.

2. The method according claim 1, **characterized by** further comprising the steps of
- assigning a control element to the remote device and
- detecting an interaction with the control element on the remote device and controlling remotely the mobile communication device.

3. The method according claim 1 or 2, **characterized in that** the steps are dependent on the operative mode of the mobile communication device.

4. A mobile communication device comprising a user interface for notifying and controlling the mobile communication device, the user interface comprising control means and notification means, the mobile communication device comprising further processing means for detecting an event and triggering a remote device in case of the detected event, **characterized in that** the mobile communication device comprising further communication means for communicating with a remote device, the control means are adapted to assign a notification to the remote device, and the processing means are adapted to trigger the remote device in case of the detected event via the communication means.

5. The mobile communication device according to claim 4, **characterized in that** the control means are adapted to assign a control element to the remote device and the processing means are adapted to interpret interaction with the control element on the remote device and to control remotely the mobile communication device via the communication means.

6. A remote device comprising a user interface comprising means for notifying a user, **characterized in that** the remote device comprising communication means for communicating with a mobile communication device triggering the remote device notifying a user.

7. The remote device according to claim 6, **characterized in that** the user interface comprising a control means, the mobile communication device is adapted to assign a control element to the remote device, and the control means is adapted to control remotely the mobile communication device via the communication means.

8. The remote device according to claim 6, **characterized in that** the remote device is a wearable and the communication means is a Bluetooth connection.

9. The remote device according to claim 6, **characterized in that** the remote device is a further mobile device and the communication means is a mobile infra structure.

10. The remote device according to claim 6, **characterized in that** the remote device a server, the communication means is a mobile infra structure connecting the server and the mobile communication device, and the server provides the user interface to a client.

11. A computer software product comprising programming means adapted to perform the step of the method according to claim 1.
